# EUROPEAN PATENT APPLICATION

(11) **EP 1 906 172 A1**
(43) Date of publication of application: **02.04.2008**
(21) Application number: 06768161.9
(22) Date of filing: 12.07.2006
(51) Int. Cl.: G01N 21/64

(54) **LIGHT MEASURING INSTRUMENT**

(30) Priority: 15.07.2005 JP 2005207705
(71) Applicant: Olympus Corporation, Tokyo 151-0072 (JP)
(72) Inventor: YAMAGUCHI, Mitsushiro c/o OLYMPUS INT. PROP. SERV.CO., LTD., Hachioji-shi, Tokyo 192-8212 (JP); HARADA, Mitsuo c/o OLYMPUS INTEL. PROP. SERV. CO., LTD., Tokyo 192-8212 (JP)
(74) Representative: von Hellfeld, Axel
(86) International application number: PCT/JP2006/313897
(87) International publication number: WO 2007/010803

(57) **Abstract**

An optical measurement apparatus which includes at least one each of a light source (1), an optical element, a photodetector (2), and a sample container (22), and which measures a physical property of a biological sample in a solution retained by the sample container according to a plurality of kinds of measurement items, wherein a combination of the light source, the optical element, and the photodetector is selected or changed according to the measurement item, and a position where the photodetector is located is adjusted according to the selection or change based on intensity of light accepted by the photodetector.

## Description

### Technical Field

The present invention relates to an optical measurement apparatus, wherein a biological sample solution in which a fluorescent material is labeled with a desired molecule is irradiated with light to analyze a temporal change in intensity of fluorescence emitted from the fluorescent material, and a reaction of a sample molecule and a status change caused by the reaction are measured by determining statistical characteristics of the sample molecule.

### Background Art

Recently, a method in which an extremely small spot light is formed inside and outside a biological cell to dynamically examine an attitude of the molecule inside and outside the cell has attracted attention with development of measurement technique using light. For example, a biological molecule which is a target inside the cell is labeled with the fluorescent material to analyze the temporal change in intensity of the fluorescence emitted from the fluorescent material, which allows the attitude of the molecule to be captured with high sensitivity in the solution.

Analysis methods such as fluorescence correlation spectroscopy (FCS) and fluorescence intensity distribution analysis (FIDA) are frequently utilized as the method for dynamically examining the attitude of the molecule using the extremely small spot light.

In FCS, the molecule to be measured is labeled with the fluorescent material, and the labeled molecule is accommodated as a sample solution in a sample container such as a microplate. A sample tank of the sample container is irradiated with a laser beam in the form of the extremely small spot light to excite the fluorescent material. At this point, the intensity of the fluorescence emitted from the fluorescent material fluctuates with time. This is because the fluorescent molecule in the medium exhibits Brownian movement. Because a diffusion velocity of the Brownian movement of the fluorescent molecule depends on a chemical reaction or a binding reaction of the molecule, the diffusion velocity of the fluorescent molecule changes in accordance with a change in an apparent size of the labeled fluorescent molecule or a change in temperature of the medium.

Therefore, the velocity change of the Brownian movement caused by the chemical reaction or binding reaction of the molecule in the solution is understood as the statistical change in time-series signal of the fluorescent intensity to analyze a correlation, allowing the measurement of a translational diffusion coefficient of the molecule or fine particle and the average number of molecules. This enables the chemical reaction or binding reaction of the molecule to be dynamically captured as a result of the measurement.

For example, Masataka Kinjou, "Protein, Nucleic acid, and Enzyme" (1999) Vol. 44, No. 9, p1431-1437, "Fluorescence correlation spectroscopy", R. Rigler and E. S. Elson (eds.) Springer (Berlin) gives an explanation of FCS. PCT National Publication Nos. 11-502608 and 2001-502062 and USP No. 6,071,748 disclose techniques concerning FCS.

In FIDA, similarly to FCS, the molecule to be measured is labeled with the fluorescent material, and the labeled molecule is accommodated as the sample solution in the sample container such as the microplate. The sample solution is irradiated with the laser beam in the form of the extremely small spot light to excite the fluorescent material. The intensity of the fluorescence emitted from the fluorescent material per unit time is measured to analyze a statistical distribution of the fluorescent intensity. Information on brightness and concentration of the fluorescent molecule, i.e., the number and rightness of the target molecule can be obtained by analyzing the statistical distribution of the number of photons of the fluorescence detected in the unit time. By using the information on the brightness, the change in apparent size of the fluorescence-labeled molecule caused by the chemical reaction or binding reaction can be detected with high sensitivity.

FIDA-polarization can also be performed using polarized light. The number of molecules or the change in apparent size of the molecule exhibiting the rotating Brownian movement can be examined by the FIDA-polarization.

Additionally, in FIDA, a region irradiated with the light is actively moved in the solution to perform the measurement of a broad region in the solution as much as possible, and the time per measurement can be shortened. In FIDA, because the statistical distribution of the light intensity is obtained, it is necessary to ensure the larger region irradiated with the light compared with FCS.

Peet Kask, Kaupo Palo, Dirk Ullmann and Karsten Gall PNAS Nov. 23, 1999, Vol. 96, No. 24, pp. 13756-13761, Biophysical Journal Vol. 79, (2000) pp. 2858-2866, and USP No. 6,376,843 describe FIDA.

However, when FCS and FIDA are performed simultaneously or sequentially in optically examining the dynamic characteristics of the biological sample, the measurement becomes complicated and troublesome, and a large work space is also required. Because the FCS measurement differs from the FIDA measurement in a combination of optical elements disposed in the measurement apparatus, it is necessary that the optical elements be replaced in each measurement, or it is necessary that plural pieces of measurement apparatus dedicated to the measurement be provided to perform the measurement concurrently.

Furthermore, in the case where different measurement items such as the FCS measurement and the FIDA measurement are performed by the single measurement apparatus, it is necessary to perform alignment of an optical axis after the optical elements such as a lens and a filter are replaced, which results in the complicated, troublesome, and time-consuming measurement.

### Disclosure of Invention

In view of the foregoing, an object of the invention is to provide an optical measurement apparatus which can rapidly and efficiently analyze the dynamic optical signals of various samples without changing a basic configuration of the measurement apparatus even if the different measurement items are measured by the same measurement apparatus.

An optical measurement apparatus according to the present invention comprises at least one each of a light source, an optical element, a photodetector, and a sample container, and measures a physical property of a biological sample in a solution retained by the sample container according to a plurality of kinds of measurement items, wherein a combination of the light source, the optical element, and the photodetector is selected or changed according to the measurement item, and a position where the photodetector is located is adjusted according to the selection or change based on intensity of light accepted by the photodetector.

Furthermore, an optical measurement apparatus according to the present invention comprises at least one each of a light source, a lens, a photodetector, a sample container, a light scanning mechanism being provided to scan light emitted from the light source in the sample container, and an optical element, and measures a physical property of a biological sample in a solution retained by the sample container according to a plurality of kinds of measurement items, wherein arrangement and operation of the light scanning mechanism are controlled according to the measurement item.

According to the optical measurement apparatus of the invention, the dynamic optical signals of various samples can rapidly and efficiently be analyzed without changing a basic configuration of the measurement apparatus.

### Brief Description of Drawings

FIG. 1 shows a basic configuration of an optical measurement apparatus according to a first embodiment of the invention.
FIG. 2 shows a beam shifter.
FIG. 3 shows a dichroic mirror retaining member.
FIG. 4 shows an automatic solution immersion feeding and discharging mechanism.
FIGS. 5A and 5B show pinhole holders.
FIG. 6 shows a barrier filter support substrate and a barrier filter rotating mechanism.
FIG. 7 shows a state of a photodetector during measurement.
FIG. 8 shows a method for solving a problem.
FIG. 9 shows another method for solving the problem.
FIG. 10 shows a modification of the first embodiment.
FIG. 11 shows a state of the photodetector during the measurement.
FIG. 12 shows a method for solving a problem.
FIG. 13 shows another method for solving the problem.
FIG. 14 shows another modification of the first embodiment.
FIG. 15 shows a configuration of a ferrule-type optical element.
FIG. 16 is a sectional view of the ferrule-type optical element.
FIG. 17 shows another example of the ferrule-type optical element.
FIG. 18A is a view explaining a method for switching a beam scanning apparatus, and FIG. 18B is a view explaining another method for switching the beam scanning apparatus.
FIG. 19A is a view explaining another method for switching the beam scanning apparatus, and FIG. 19B is a view explaining another method for switching the beam scanning apparatus.

### Best Mode for Carrying Out the Invention

### (First Embodiment)

Preferred embodiments of the invention will be described with reference to the drawings.

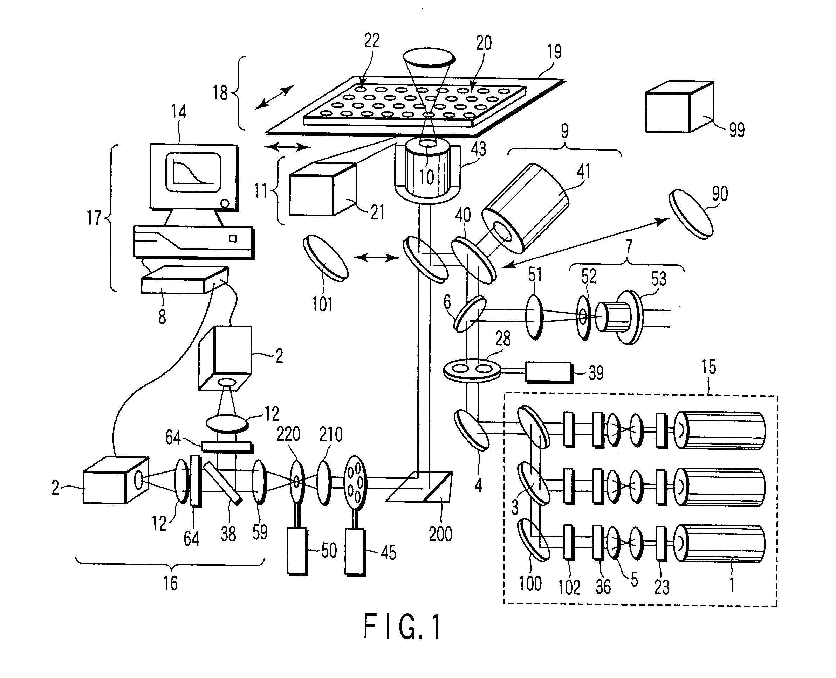

FIG. 1 shows a basic configuration of an optical measurement apparatus according to a first embodiment of the invention.

The optical measurement apparatus of the first embodiment mainly includes a light source unit 15, a light quantity monitoring mechanism 7, a beam scanning apparatus 9, an objective lens 10, a solution immersion feeding mechanism 11, a sample retaining mechanism 18, an optical detection unit 16, and a signal processing unit 17.

The detailed configuration and operation of the optical measurement apparatus will be described below.

A laser beam source 1, a shutter 23, a beam diameter changing mechanism 5, a rotary ND filter 36, a beam shifter 102, a mirror 100, and a dichroic mirror 3 are provided in the light source unit 15.

Three kinds of the laser beam sources 1 are provided in the light source unit 15. A helium-neon laser (oscillation output of 1 mW and wavelength of 543 nm), a helium-neon laser (oscillation output of 2 mW and wavelength of 633 nm), and an argon laser (oscillation output of 10 mW and wavelength of 488 nm) are provided in the first embodiment.

A pulse laser may be used as the light source. For example, a laser pulse having a wavelength of 514.5 nm, average output of 100 mW, and a pulse width of 200 picoseconds can be obtained when a CW mode-locked argon ion laser is used.

A multi-line laser in which an acousto-optic tunable filter (AOTF) is mounted may be provided. Because the multi-line laser includes the laser beams having plural wavelengths, the oscillated wavelengths are switched by AOTF, whereby the number of lasers provided in the light source unit can be decreased.

The shutter 23 is provided near an outgoing end of each laser beam source 1, and the shutter 23 has a mechanism (not shown) in which the shutter 23 is opened and closed by electronic control. A beam diameter of the outgoing laser beam is expanded to form parallel light by the beam diameter changing mechanism 5 in which lenses are combined. A focal distance can be changed to adjust the outgoing beam diameter by changing the combination of the lenses constituting the beam diameter changing mechanism 5.

The laser beam formed into the parallel light passes through the rotary neutral density (ND) filter 36 and beam shifter 102 which are prepared in each optical path, and the laser beam is selectively reflected by and transmitted through the mirror 100 and dichroic mirror 3 respectively. The optical paths from the three laser beam sources 1 are merged into one optical path by rotating and adjusting the beam shifter 102.

A beam scanning apparatus control unit 99 is connected to the beam scanning apparatus 9. The beam scanning apparatus control unit 99 provides a control signal to control the arrangement and operation of the beam scanning apparatus 9. That is, the beam scanning apparatus control unit 99 switches running and non-running states of the beam scanning apparatus 9. The beam scanning apparatus control unit 99 also controls a rotation angle of an eccentrically rotating mirror 40 constituting the beam scanning apparatus 9 according to measurement conditions of the FIDA measurement and FCS measurement.

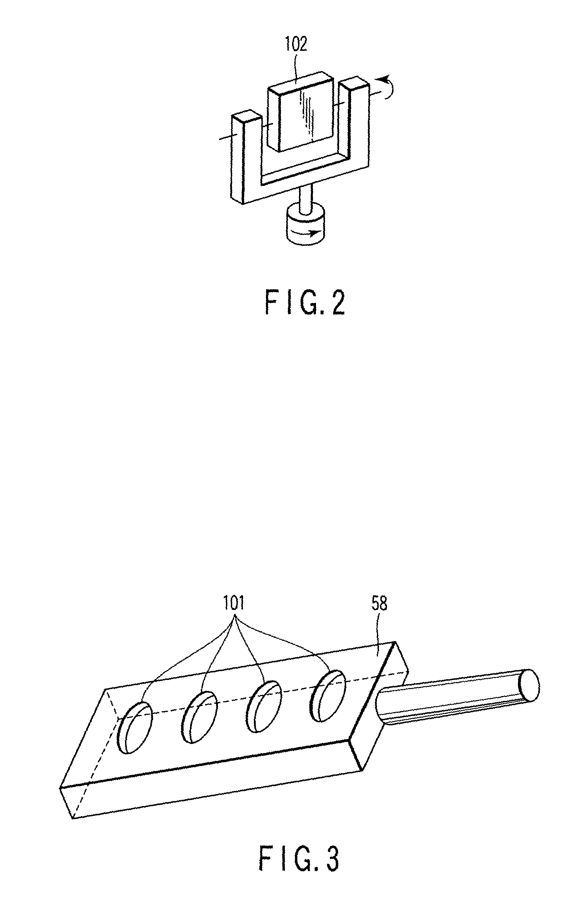

FIG. 2 shows a beam shifter 102.

The beam shifter 102 has a structure in which a glass plate having a predetermined thickness is moved with a two-axis degree of freedom. The beam shifter 102 is adjusted by rotating the glass plate about the two axes perpendicular to each other such that a detection output of a photodetector 53 of a light quantity monitoring mechanism 7 becomes the maximum. The beam shifter 102 can also be adjusted as follows: the detection output of the photodetector 53 is input to the computer 14, and the two axes of the glass plate are driven based on a control output from the computer 14 (driving mechanism is not shown).

The laser beams from the laser beam sources 1 are merged into the one laser beam by the adjustment of the beam shifter 102, the direction of the laser beam is changed by the mirror 4, and the laser beam reaches a polarizer holder 28. The polarizer holder 28 has a slide-type plate-shaped structure, and usually circular polarizer retaining frames are provided at two points. A circular polarizer is disposed in one of the polarizer retaining frames, and the other polarizer retaining frame has an air space. A polarizer holder driving unit 39 attached to the polarizer holder 28 slides the polarizer holder 28 to locate the polarizer on the optical path if needed.

The slide adjustment of the polarizer holder driving unit 39 is performed by a control device in which a stepping motor is used (not shown). In the case where the polarization measurement is performed using the optical measurement apparatus, the polarizer is located in the polarizer holder 28 and mounted on the optical path. In the case where the polarization measurement is not performed, the polarizer does not exist on the optical path. The polarizer holder 28 may be formed in a disc shape. Alternatively, plural polarizers are mounted around the disc, and the polarizers may be switched by rotating the polarizer holder 28.

For example, a sheet-like polarization plate can be used as the polarizer disposed in the polarizer holder 28. However, the polarizer is not limited to the polarization plate. For example, when the polarizer such as a Glan-Thompson prism having a high extinction ratio is used, the polarization measurement can be performed with higher accuracy.

The laser beam is incident to a disc-shaped half mirror 6 after passing through the polarizer holder 28. The laser beam is partially reflected by the half mirror 6 and enters the light quantity monitoring mechanism 7. The light quantity monitoring mechanism 7 includes a lens 51, a pinhole 220, and a photodetector 53. The laser beam passes through the lens 51 and pinhole 220, and the laser beam is collected onto a light acceptance surface of the photodetector 53. A semiconductor photodetector is used as the photodetector 53.

The detection output of the photodetector 53 is input to the computer 14, and the computer 14 controls a driving current of a laser driving power supply (not shown) based on the detection output such that predetermined light source output light intensity is obtained. Alternatively, the computer 14 can control the rotary ND filter 36 to adjust the light output intensity from the laser beam source 1 (not shown).

The laser beam passing through the half mirror 6 reaches the eccentrically rotating mirror 40. The eccentrically rotating mirror 40 is obliquely located such that the direction of the reflected light is rotated about a center axis according to the rotation of the eccentrically rotating mirror 40. Therefore, the laser beam is incident to an optical axis of the objective lens 10 with a predetermined inclination angle. The eccentrically rotating mirror 40 is rotated by a motor 41 and thereby the collective spot of the light beam passing through the objective lens 10 is scanned in a substantially ellipsoidal shape in the sample.

The collective spot of the laser beam is scanned in the case where the FIDA measurement is performed, and the collective spot of the laser beam is fixed in the case where the FCS measurement is performed. Specifically, the beam scanning apparatus control unit 99 generates the control signal to put the beam scanning apparatus 9 into the running state, and the eccentrically rotating mirror 40 is rotated by a predetermined angle and stopped according to the measurement conditions. Therefore, the laser beam emitted from the light source propagates along the optical axis and passes through the objective lens to perform confocal illumination in the sample.

In the case where the FIDA measurement is performed, the motor 41 is rotated to rotate the eccentrically rotating mirror 40, the laser beam passing through the optical axis passes through the objective lens, and the sample is irradiated with the laser beam while the laser beam draws the substantial ellipsoid at the focal position in the solution.

In the case where the FCS measurement is performed, the motor 41 is stopped to fix the eccentrically rotating mirror 40 at a proper position by the computer control. At this point, the stopping position of the motor 41 is previously determined by the beam scanning apparatus control unit 99 such that the surface of the eccentrically rotating mirror 40 is set to an orientation in which the laser beam passing through the optical axis passes through the objective lens along the optical axis.

In the case of the FCS measurement, the eccentrically rotating mirror 40 may be replaced with a mirror 90 which is not eccentric to the optical axis.

Then, the laser beam is reflected by a switching-type dichroic mirror 101, and the laser beam is incident to the objective lens 10. For example, a 40-power water immersion objective lens (NA 1.15) is used as the objective lens 10. A dry-type objective lens having no correction ring may be used as the objective lens 10, or a solution-immersion-type objective lens having the correction ring may be used as the objective lens 10.

In the switching-type dichroic mirror 101, multilayer coating is performed to the surface of the disc-shaped glass plate to obtain the optimum transmission and reflection spectra. The switching-type dichroic mirror 101 is not limited to the disc shape, but a prism type may be used. In the switching-type dichroic mirror 101, the glass which constitutes the substrate is adjusted to have the optimum thickness to prevent mixture of noise light caused by backside reflection in the signal light.

The switching-type dichroic mirror 101 plays a role of separating the laser beam which is the light source from a fluorescent signal emitted from the sample. When the wavelength used in the measurement is changed, the optimum wavelength is selected from the plural dichroic mirrors 101 having different reflection and transmission characteristics.

FIG. 3 shows a dichroic mirror retaining member used to switch the dichroic mirrors.

A dichroic mirror retaining member 58 of FIG. 3 has the slide structure in which the plural circular dichroic mirrors 101 are horizontally arranged in line. Alternatively, a rotary type in which the plural dichroic mirrors 101 are mounted on a revolver or a turret may be used. The dichroic mirror retaining member 58 is made of a metal such as aluminum. The dichroic mirror 101 is not limited to the circular shape, but a square shape or a rectangular shape may be used. Instead of the switching-type dichroic mirror 101, an acousto-optic tunable filter (AOTF) may be used to select the wavelengths of the transmitted light and reflected light.

A microplate 20 (96,384 holes) is used as a sample container in which the sample is accommodated. The microplate 20 is made of a resin or glass. As shown in FIG. 1, many wells 22 are arrayed in the microplate 20, and the well 22 is a groove in which the sample having the same shape is accommodated. A bottom surface of the well 22 of the microplate 20 is made of an optically transparent material such as the glass and an acrylic resin, and the light passing through the objective lens 10 is incident to the sample accommodated in the well 22 with little attenuation.

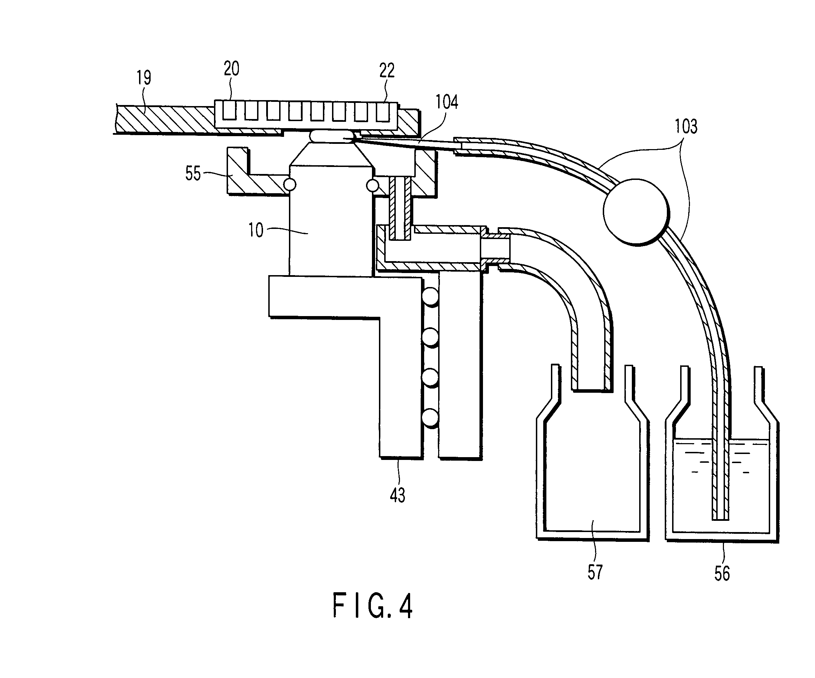

FIG. 4 shows an automatic solution immersion feeding and discharging mechanism 21 necessary when using a solution immersion-type objective lens. The microplate 20 is placed on a sample stage 19, and the microplate 20 is fixed to the sample stage 19 using a fixture such as a clip.

The objective lens 10 is inverted so as to face the bottom surface of the microplate 20. A drop of solution immersion is put on a front end portion of the objective lens 10 from a nozzle 104 through a tube 103 dipped in a solution feeding bottle 56, and a gap between the front end portion of the objective lens 10 and the bottom surface of the microplate 20 is filled with the solution immersion. In the case where the solution immersion spills or overflows, the solution immersion is retained by a solution immersion retaining plate 55 provided around the objective lens 10.

On the other hand, in the case where the solution immersion retained in the upper surface of the objective lens 10 runs out during the measurement, the computer 14 receives the information as a feedback, and the solution immersion in the solution feeding bottle 56 is automatically fed to the front end portion of the objective lens 10 by driving a pump. After the measurement, the solution immersion is naturally dried, and the excessively fed solution immersion falls naturally in a waste solution bottle 57.
Alternatively, the solution immersion is sucked through the nozzle 104, and the solution immersion may be switched by a switching mechanism (not shown) and introduced to the waste solution bottle 57.

The solution immersion of the automatic solution immersion feeding and discharging mechanism 21 is not limited to water, but oil may be used. In the case where the microplate 20 is used as the sample container to perform the observation or measurement, usually the samples are accommodated in many wells 22, and the position is adjusted by driving the sample stage 19, and the observation or measurement is performed for each sample.

In the sample stage 19, stepping motors (not shown) are attached along the X- and Y-axis directions, and the microplate 20 can precisely be moved in a horizontal direction, i.e., the X- and Y-axis directions. The sample stage 19 is moved in the XY plane, and the repeated measurement is sequentially performed while the microplate 20 is moved and adjusted.

An objective lens Z-axis retaining mechanism 43 is provided around the objective lens 10, and the objective lens Z-axis retaining mechanism 43 is moved in the optical axis direction, i.e., a Z-axis direction by a computer instruction. That is, in the well 22, the focal position of the laser beam can vertically be moved along the optical axis direction.

After the laser beam is collected through the objective lens 10, the laser beam is formed into an extremely small spot light in the well of the microplate 20 in which the sample is accommodated. The collective position of the laser beam is located at a central portion of the well for the horizontal direction, i.e., X- and Y-axis directions and a substantially central portion in the sample for the vertical direction (Z-axis). At this point, a confocal region of the laser beam obtained in the well 22 becomes a substantially cylindrical spot light having a diameter of about 0.6 µm, and a length of about 2 µm.

Rhodamine green (RhG), Tamra, and Alexa 647 are the fluorescent materials which are used while the sample is directly labeled therewith. The rhodamine green (RhG) is excited by the argon laser having the wavelength 488 mm, Tamra is excited by the helium-neon laser having the wavelength 543 mm, and the Alexa 647 is excited by the helium-neon laser having the wavelength 633 mm.

The fluorescent molecule in the sample in the well 22 is excited by laser beam collected by the objective lens 10, and the fluorescence is emitted from the fluorescent molecule. The fluorescence is captured as the signal light again by the objective lens 10, and the fluorescence reaches the switching-type dichroic mirror 101. Because the signal light has the wavelength longer than that of the incident laser beam, the signal light is transmitted through the switching-type dichroic mirror 101 and reflected by a reflecting prism 200, and a lens 210 collects the signal light into a pinhole surface of a pinhole 220 provided at the back of the lens 210.

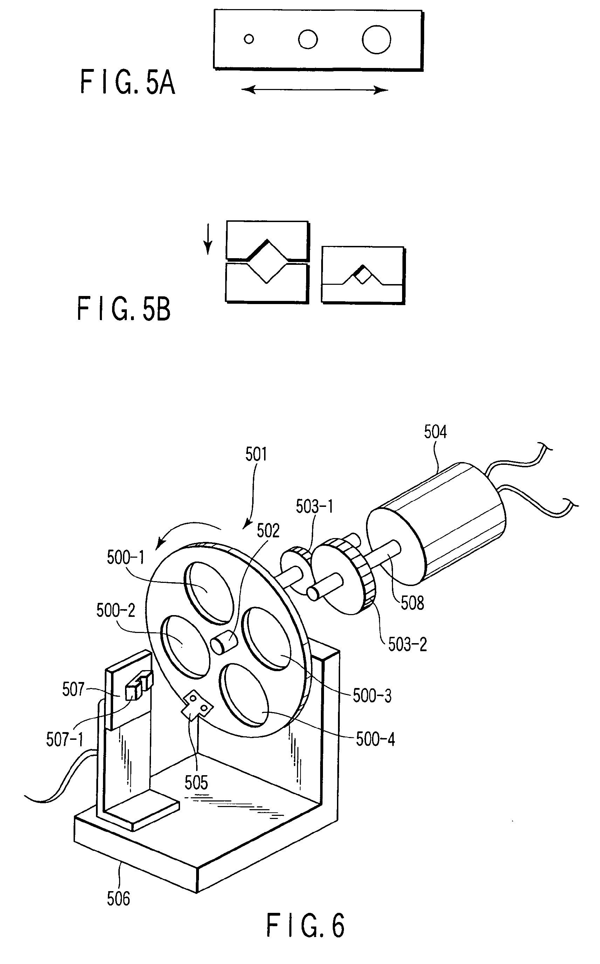

A pinhole holder 50 is disposed such that the pinhole 220 is located at a position on the optical axis which is conjugate with the focal position of the objective lens 10. As shown in FIG. 5A, the pinhole holder 50 is formed in a slide manner while plural pinholes having different diameters are arranged in line, and the pinhole holder 50 is adjusted such that the optimum pinhole is disposed according to the size of the necessary confocal region (spot light region). Alternatively, as shown in FIG. 5B, two plate-shape members having notches are disposed while notches face each other, and a distance between the plate-shape members may be changed to continuously change a size of a rectangular frame formed in the central portion.

A barrier filter 45 is disposed in front of the pinhole 220. In the barrier filter 45, the spectrum of the transmitted light is adjusted according to an emission spectrum of the fluorescence emitted from the sample. That is, the barrier filter 45 constitutes a bandpass filter, and only the light having a wavelength band of the emission spectrum of the fluorescence which becomes the signal light is transmitted through the barrier filter 45. The noise light such as scattered light generated in the sample container and part of the incident light reflected from the wall of the well 22 to return to the incident optical path can be blocked by the barrier filter 45. The noise light can be blocked because the wavelength of the fluorescence differs from the fluorescence of background light. A beam splitter (AOBS) formed by the acousto-optic tunable filter may be used as the barrier filter 45.

A focal surface of the lens 210 is aligned with an opening surface of the pinhole 220. An optical position sensor (not shown) and a pinhole driving device (not shown) are attached to the pinhole 220, and the position of the pinhole 220 can be adjusted in the X-, Y-, and Z-axis directions by the pinhole driving device. Accordingly, the opening surface of the pinhole 220 can be aligned with the focal surface of the lens 210.

The position of the pinhole 220 returns automatically to a default position in response to the switching of the barrier filter 45 or the beam splitter (AOBS) formed by the acousto-optic tunable filter. The background light from the outside of the confocal region of the light formed in the well is removed by the pinhole 220.

FIG. 6 shows a barrier filter support substrate 501 and a barrier filter rotating mechanism. As shown in FIG. 6, the barrier filter is formed in the disc shape, and the barrier filter is disposed along a circumference of the disc-shaped barrier filter support substrate 501. The barrier filter support substrate 501 is rotated about a center axis thereof, and a center axis of the barrier filter located at a predetermined position coincides with the optical axis.

A rotating shaft 502 is attached in the center of the barrier filter support substrate 501, and a gear 503-1 is attached to the rotating shaft 502. A gear 503-2 is attached to a rotating shaft 508 of a stepping motor 504. The rotation of the stepping motor 504 is transmitted to the barrier filter support substrate 501 according to a gear ratio of the gear 503-1 and gear 503-2.

On the other hand, a rotation support plate 505 is attached to a part of the circumferential surface of the barrier filter support substrate 501, and the rotation support plate 505 passes through a groove in a detection portion 507-1 of a non-contact position sensor 507 attached to a filter wheel support base 506. An optically opaque material such as an aluminum plate coated in black is used as the rotation support plate 505.

In the groove structure portion 507-1 of the non-contact position sensor 507, an infrared light emitting diode and an infrared photodetector are disposed while facing each other. When the rotation support plate 505 passes through the groove in the detection portion 507-1, because the infrared light is interrupted, the passage of the rotation support plate 505 can be detected. The position where the infrared light emitting diode and the infrared photodetector are disposed while facing each other is defined as an initial position of the barrier filter support substrate 501.

The rotation angle of the barrier filter support substrate 501 is uniquely determined by the rotation angle of the stepping motor 504 since the rotation support plate 505 is located at the initial position. That is, the current position of each barrier filter is determined. Accordingly, each barrier filter is switched by controlling the rotation of the stepping motor 504.

Examples of the method for detecting the rotation support plate 505 with the non-contact position sensor 507 include a method in which a change in electrostatic capacity is utilized and a method in which magnetism is used in addition to the method in which the light is utilized. The rotating shaft of the barrier filter support substrate 501 is rotatably attached to the filter wheel support base 506.

The signal light passing through the pinhole 220 is formed into parallel light by a collimator lens 59, and the parallel light is separated into two directions perpendicular to each other by a dichroic mirror/polarization beam splitter 38. The dichroic mirror/polarization beam splitter 38 has a mechanism which switches a dichroic mirror and a polarization beam splitter. For example, the rotating mechanism shown in FIG. 6 may be used as the switching mechanism of the dichroic mirror/polarization beam splitter 38. In the case where cross-correlation measurement is performed with two kinds of fluorescent materials, the dichroic mirror is automatically selected, and the spectra of the reflected light and transmitted light are defined according to the emission spectra of the different fluorescent materials. In the case where the polarization measurement is performed, the polarization beam splitter is automatically selected, and different polarized light component between the reflected light and transmitted light is separated. In the separated signal light, the light having the wavelength of the excited laser beam is selectively blocked to improve the signal-to-noise ratio of the signal light by a bandpass filter 64.

The signal light passing through the bandpass filter 64 is collected by a lens 12, and the signal light reaches a light acceptance surface of a photodetector 2. An optical position sensor and a photodetector driving device are attached to each photodetector 2, the position of the light acceptance surface of the photodetector 2 can be adjusted along the X-, Y-, and Z-axis directions by a photodetector driving device. For example, an extremely weak photodetector such as an avalanche photodiode (APD) and a photomultiplier tube is used as the photodetector 2. A semiconductor optical position sensor is used as the optical position sensor.

A method for adjusting the position of the photodetector 2 will be described below.

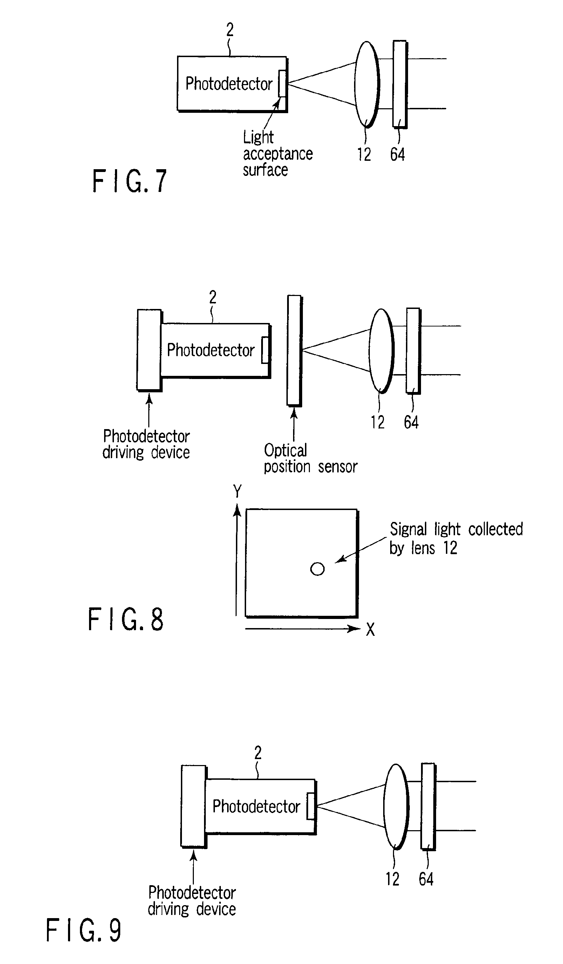

FIG. 7 shows a state of the photodetector when the measurement is actually performed. In order that the photodetector 2 properly accepts the light, it is necessary that not only the light acceptance surface be located at the focal position but also a predetermined position in the light acceptance surface be irradiated with the light. However, the position where the signal light is collected by the lens 12 is shifted by switching the dichroic mirror 101 and the bandpass filter 64.

FIG. 8 shows a method for solving the problem. During the non-measurement after the optical elements are switched, the optical position sensor is inserted near the position where the signal light is collected by the lens 12. The optical position sensor outputs the position irradiated with the light as information on a coordinate (X, Y). The photodetector driving device drives the photodetector 2 such that the coordinate (X, Y) becomes the predetermined position in the light acceptance surface of the photodetector 2. Then, the optical position sensor is moved to the outside.

FIG. 9 shows another method for solving the problem. In the method of FIG. 9, the optical position sensor is not used. The photodetector driving device moves the photodetector 2, the photodetector 2 monitors the signal, and the photodetector 2 is located at the position where the light acceptance intensity becomes maximum. The method of FIG. 9 can be applied when the collective position of the signal light is slightly shifted by switching the optical elements or when the collective position of the signal light falls within the light acceptance surface of the photodetector 2.

The signal light accepted by the photodetector 2 is extremely weak light which is a photon pulse signal. The photodetector 2 converts the photon pulse signal into a photocurrent pulse signal which is an electric signal, and the photocurrent pulse signal is amplified and sent to a signal processing device 8. The signal processing device 8 shapes a waveform of the photocurrent pulse signal into an on-off voltage pulse, and the on-off voltage pulse is introduced to the computer 14. The voltage pulse is stored in a memory (not shown) of the computer 14, and the computation such as the correlation spectroscopy and the light intensity distribution analysis is performed. The computer 14 computes an autocorrelation function, a cross-correlation function, and a light intensity distribution function of a fluctuation in intensity of the obtained fluorescence. The measurement result is displayed in the form of a graph or data on a screen of the computer 14, or the measurement result is stored in the memory (not shown) of the computer 14.

A control operation performed by the computer 14 will be described below. The computer 14 selects the laser beam source 1 used in the measurement, and the computer 14 turns on the power of the laser beam source 1. The computer 14 causes a shutter driving power supply (not shown) to open and close the shutter 23 if needed. The computer 14 monitors the output of the photodetector 53 of the light quantity monitoring mechanism 7, and the computer 14 adjusts the driving current of the motor (not shown) such that the output light intensity of the laser beam source 1 becomes a desired level. Therefore, the disc-shaped rotary ND filter 36 attached to the motor is rotated by a necessary angle.

In the configuration of the rotary ND filter 36, a transmittance distribution is changed along the circumferential direction. Accordingly, the intensity of the laser beam can be changed by the rotation of the rotary ND filter 36. A plate-shaped ND filter in which the transmittance is changed in a step manner along a longitudinal direction of the plate may be used instead of the disc-shaped rotary ND filter 36. In the case of using the plate-shaped ND filter, the intensity of the transmitted light is changed by sliding the plate-shaped ND filter. Usually PID control (Proportional, Integral, and Differential) is used as the method for controlling the position. However, other control techniques such as simple on/off control may be used.

In the measurement apparatus of the first embodiment, the characteristics of the molecule such as a fluorochrome-labeled intracellular DNA and a fluorochrome-labeled cell membrane which constitute a tissue can be examined because the objective lens having the high numerical aperture (NA 1.15) is used. A rocking motion of a Langmuir-Blodgett (LB) film can also be measured.

Using the measurement apparatus of the first embodiment, fluorescence resonance energy transfer (FRET) can be determined to examine the binding state or a dissociation state of a protein in real time. An intracellular calcium ion concentration can quantitatively be measured. A distance between various regions of a biopolymer, a three-dimensional or four-dimensional structure of the biopolymer, or a dynamic change of the biopolymer can also be measured.

When a calmodulin is bonded to a calcium ion (Ca²⁺) in the cell, the calmodulin is activated to generate a structural change. The regions of the calmodulin are labeled with the different fluorescent materials respectively. When one of the fluorescent materials is excited, FRET is generated and the other fluorescent material emits the fluorescence. The structural change of the calmodulin can be examined in the cell by measuring the fluorescence.

Both ends of the protein are labeled with the two different kinds of the fluorescent proteins, e.g., a cyan fluorescent protein (CFP) and a yellow fluorescent protein (YFP) to measure phosphorylation of the protein. The structural change is generated in the protein by the phosphorylation of the protein. FRET is generated when the fluorescent proteins are brought extremely close to each other within about 10 nanometers. The phosphorylation of the protein can be revealed by the measurement of FRET.

The sample is irradiated with the laser beam using the measurement apparatus, and the fluctuation in intensity of the scattered light emitted from the sample is measured to perform the correlation spectroscopy, allowing the measurement of physical properties such as a translational diffusion velocity of the sample or a morphological change caused by various reactions such as the binding reaction. For example, a solution in which protein-immobilized carrier particles are dispersed is used as the sample. Phosphorescence emitted from the sample or Raman scattering light can also be measured.

### (First Modification)

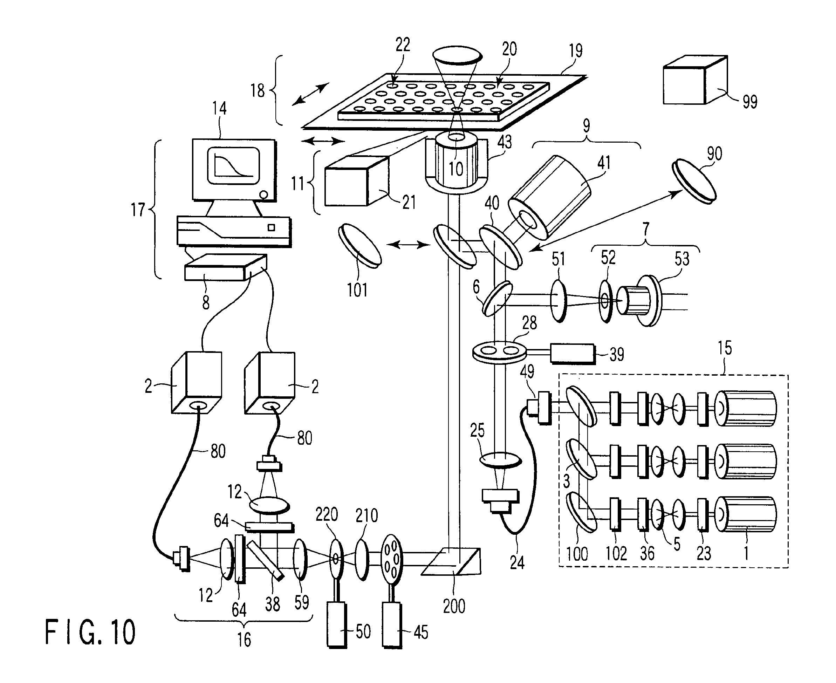

FIG. 10 shows a first modification of the first embodiment. In the first modification, the measurement apparatus is unitized in a light source unit, a measurement apparatus main body unit, and a light acceptance unit, the units are optically connected to one another using optical fibers 24 and 80 to achieve downsizing of the measurement apparatus. The first modification is similar to the first embodiment except that the single-mode optical fiber 24 and the multi-mode optical fiber 80 are used to transmit the light in the light source and light acceptance unit respectively. Accordingly, the same component as the first embodiment is designated by the same numeral, and the description of the basic apparatus configuration and operation is omitted.

The light sources 1 are disposed in the light source unit 15 separated from the measurement apparatus main body. An optical fiber light acceptance terminal 49 is irradiated with the laser beam emitted from each of the light sources 1. The light acceptance surface of the optical fiber light acceptance terminal 49 accepts the laser beam, and the laser beam is efficiently introduced to an FC connector (not shown) provided at the other end through the single-mode optical fiber 24. A distance between the output end of the single-mode optical fiber 24 and the collimator lens 25 coincides with the focal distance of the collimator lens 25.

The laser beam emitted from the light source is transmitted to the measurement apparatus main body using the single-mode optical fiber 24, which allows the light source unit 15 to be freely disposed. Particularly, in the case where the laser having the large output light intensity is used as the light source 1, the laser main body is enlarged and sometimes it is necessary to attach a cooling mechanism to the laser main body. In such cases, only the light sources 1 are separated as the light source unit 15, and the laser beam is introduced to the measurement apparatus using the single-mode optical fiber 24. Therefore, installation space can efficiently be utilized and the downsizing of the measurement apparatus can be achieved. The optical alignment, i.e., laser beam coupling can be performed in front of or at the back of the single-mode optical fiber 24, so that the laser beam coupling can be separately performed.

The detection optical system 16 is configured so that the signal light is accepted through the multi-mode optical fiber 80. The multi-mode optical fiber 80 is connected to the photodetector 2. The multi-mode optical fiber 80 can be used to freely dispose the photodetector 2 in the apparatus. Additionally, the downsizing of the measurement apparatus main body can be achieved.

A method for adjusting the light acceptance position of the multi-mode optical fiber 80 will be described below.

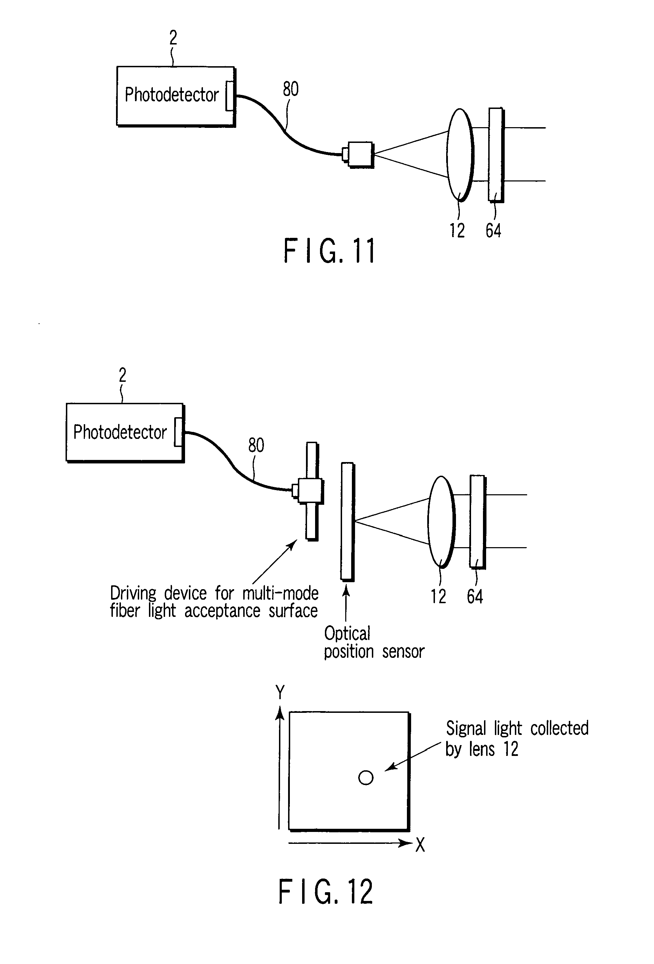

FIG. 11 shows a state of the photodetector 2 when the measurement is actually performed. In order that the photodetector 2 properly accepts the light, it is necessary that not only the light acceptance surface of the multi-mode optical fiber 80 be located at the focal position but also a predetermined position in the light acceptance surface be irradiated with the light. However, the position where the signal light is collected by the lens 12 is shifted in the horizontal or vertical direction by switching the dichroic mirror 101 and the bandpass filter 64.

FIG. 12 shows a method for solving the problem. During the non-measurement after the optical elements are switched, the optical position sensor is inserted near the position where the signal light is collected by the lens 12. The optical position sensor outputs the position irradiated with the light as the information on the coordinate (X, Y). A light acceptance surface driving device drives the light acceptance surface of the multi-mode optical fiber 80 such that the coordinate (X, Y) becomes the predetermined position in the light acceptance surface of the multi-mode optical fiber 80. Then, the optical position sensor is moved to the outside.

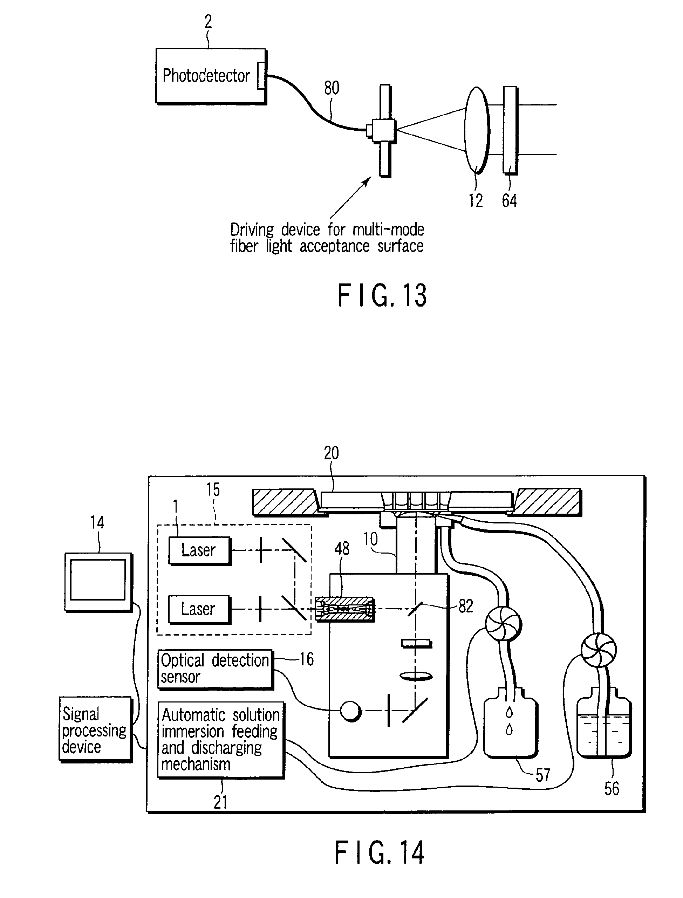

FIG. 13 shows another method for solving the problem. In the method of FIG. 13, the optical position sensor is not used. The light acceptance surface driving device moves the light acceptance surface of the multi-mode optical fiber 80, the photodetector 2 monitors the signal, and the photodetector 2 is located at the position where the light acceptance intensity becomes maximum. The method of FIG. 13 can be applied when the collective position of the signal light is slightly shifted by switching the optical elements or when the collective position of the signal light falls within the light acceptance surface of the multi-mode optical fiber 80.

### (Second Modification)

FIG. 14 shows a second modification of the first embodiment. Similarly to the first modification, the second modification has the configuration in which the measurement apparatus main body and the light source unit are separated from each other. Accordingly, the same component as the first embodiment is designated by the same numeral, and the description of the basic apparatus configuration and operation is omitted.

A ferrule-type optical element 48 is used in a light introduction unit to the measurement apparatus main body from the light source unit 15 including the plural laser beam sources 1. The ferrule-type optical element 48 is formed by a solid body, and the ferrule-type optical element 48 accepts the incident light and outputs the outgoing light. Therefore, a point light source can equivalently be generated at the position of the measurement apparatus main body.

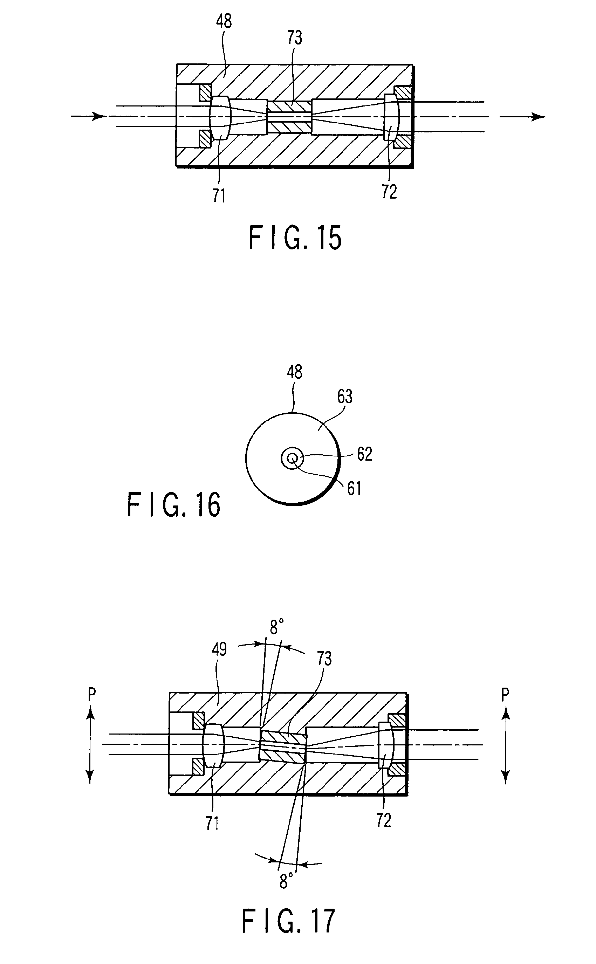

FIG. 15 shows a configuration of the ferrule-type optical element 48. In the ferrule-type optical element 48, the parallel light beam is collected to an end face of an optical waveguide portion 73 by a collective lens 71, the light beam is transmitted through optical waveguide portion 73, and the outgoing light beam is formed into the parallel light beam through a collimator lens 72. That is, the laser beam emitted from the ferrule-type optical element 48 becomes the parallel beam.

As shown in FIG. 14, the laser beams emitted from the laser beam sources 1 are combined and reaches an optical input port included in the measurement apparatus main body. The ferrule-type optical element 48 is disposed in the optical input port, and the laser beam is introduced to the measurement apparatus main body from the ferrule-type optical element 48. The laser beam emitted from the ferrule-type optical element 48 becomes high-quality collimated light, a width of the light beam is enlarged by a beam expanding function, and the light beam is introduced to a dichroic mirror 82. The light beam passes through the objective lens 10, and the sample is irradiated and excited with the light beam.

The diameter of the light beam emitted from the ferrule-type optical element 48 can be regarded as the point light source because the diameter of the optical waveguide portion 73 becomes a mode field diameter. Accordingly, the light beam emitted from the collimator lens 72 of the ferrule-type optical element 48 becomes the collimated light. The outgoing light beam having the desired diameter can be obtained by changing the focal distance of the collimator lens 72 of the ferrule-type optical element 48.

When the light beams emitted from the plural laser beam sources is combined, the light beams having various wavelengths are collected into one beam using the ferrule-type optical element 48, which allows the small optical system to be formed. In this case, the outgoing light beam becomes the light beam emitted from the mode field diameter, and a high-quality Gaussian beam can be obtained by collimating the outgoing light beam.

Similarly to the first modification, in the case where the laser beam coupling which is the optical alignment is performed, the laser beam coupling can be performed in front of and at the back of the optical fiber, so that the laser beam coupling can separately be performed. In the second modification, the light beam propagates through the short distance of the optical fiber having a function as the optical waveguide, so that the rotation of the polarized light of the laser beam can be suppressed.

FIG. 16 is a sectional view of the ferrule-type optical element 48. An optical waveguide portion 61 made of silicate glass having the excellent light transmission property is located in the substantial center of the ferrule-type optical element 48, the optical waveguide portion 61 is coated with a large-refractive-index material 62 such as SiO₂-TiO₂-CaO-Na₂O, and the large-refractive-index material 62 is coated with a protective member 63.

The optical waveguide portion 61 may be made of quartz. The optical waveguide portion 61 has a diameter of about 2 to about 5 micrometers, and desirably the optical waveguide portion 61 is formed in the mode field diameter through which the light having the wavelength to be used propagates in the single mode. The large-refractive-index material 62 with which the optical waveguide portion 61 is coated has a sectional diameter of about 100 to about 200 micrometers. The protective member 63 with which the optical waveguide portion 61 is coated has an outer diameter of about 1.25 to about 2.5 mm. The protective member 63 is made of a ceramic such as alumina and zirconia or a metal such as aluminum.

In the ferrule-type optical element 48, both cylindrical end faces are mirror-polished to improve the light transmission property. The ferrule-type optical element 48 has a length of 1 to 100 mm. When the apparatus is miniaturized, the ferrule-type optical element 48 has the length of about 10 mm. The optical waveguide portion 73 of the ferrule-type optical element 48 has the length of 1 to 100 mm. Desirably the optical waveguide portion 73 has the length of 10 to 30 mm, and more desirably the optical waveguide portion 73 has the length of 15 to 25 mm.

The ferrule-type optical element 48 can be used as one optical component while incorporated in the apparatus. However, because it is necessary that the ferrule-type optical element 48 is aligned with other optical systems, the ferrule-type optical element 48 is effectively used while combined with the collective lens 71 as shown in FIG. 15. Because the light beam emitted from the optical waveguide portion 73 becomes the diffused light having the intrinsic NA, the ferrule-type optical element 48 is adjusted while combined with the collimator lens 72.

The end face of the optical waveguide portion 73 of the ferrule-type optical element 48 coincides with the focal position of the collective lens 71 of the ferrule-type optical element 48, and the outgoing-side end face of the ferrule-type optical element 48 coincides with the focal position of the collimator lens 72. When the focal distances are selected respectively, the ferrule-type optical element 48 acts as a beam expander which enlarges the beam diameter.

FIG. 17 shows another example of the ferrule-type optical element 48. A ferrule-type optical element 49 of FIG. 17 differs from the ferrule-type optical element 48 as follows: Both the incident-side end face and the outgoing-side end face are oblique to the optical axis of the optical waveguide portion 73 of the ferrule-type optical element 48 with an inclination angle, and the incident-side end face and the outgoing-side end face are polished so as to be parallel to each other. The incident-side end face and the outgoing-side end face inclination angles have the inclination angle of eight degrees with respect to the optical axis. That is, the incident-side end face and the outgoing-side end face have the inclination angle of eight degrees with respect to the surface perpendicular to the optical axis. The inclination of the optical waveguide portion 73 of the ferrule-type optical element 49 eliminates mirror reflection of the light beam passing through the ferrule-type optical element 49 at the end face of the optical waveguide portion 73 of the ferrule-type optical element 49. Accordingly, a return light noise can be prevented to stably retain the light intensity of the light source.

The inclination angle of the end face of the ferrule-type optical element 49 is not limited to the eight degrees with respect to the optical axis. The effective inclination angle of the end face of the ferrule-type optical element 49 ranges from zero to ten degrees with respect to the optical axis. Desirably the effective inclination angle ranges from six to ten degrees with respect to the optical axis, and more desirably ranges from seven to nine degrees.

In the ferrule-type optical element 48, even if the polarized light is used, the polarization characteristics can be maintained in the outgoing light beam by adopting the structure in which the a plane of vibration of the polarized light is maintained.

Usually the beam expander is used to enlarge the laser beam to obtain the parallel beam. Aberration can be reduced using the beam shaping optical element of the invention. Additionally, the optical system can be simplified to reduce the labor hour for aligning the optical axis.

The operation of the optical measurement apparatus will be described below. The operation of the optical measurement apparatus is performed by automatic control of the computer 14.
1. When a user inputs start-up of the measurement apparatus to the computer 14, the computer 14 turns on a main power supply of the measurement apparatus.
2. When the user sets the measurement items, the computer 14 selects the combination of the optical elements in the measurement apparatus according to a predetermined table. The computer 14 also selects the laser used.
3. The computer 14 turns on the power of the optical position sensor. Then, the computer 14 controls power-on and off of the optical position sensor according to an operation program of the measurement apparatus.
4. The computer 14 moves the sample stage to the initial position.
5. The computer 14 moves the optical elements to the original position. The computer 14 determines an origin according to the maximum output value of various optical elements, the sample stage, and the like while monitoring an output signal of the optical position sensor. In the case where the each optical element is located out of the origin, the computer 14 drives the stepping motor to align the stepping motor with the origin.
6. The user sets the samples in the wells of the microplate. The microplate is placed on the sample stage.
7. The computer 14 adjusts the XY position of the objective lens. That is, the computer 14 moves the sample stage to adjust the horizontal position of the sample stage such that the objective lens is located immediately below the bottom surface of the well of the measurement target.
8. The computer 14 turns on the power of the solution immersion feeding mechanism to fill the upper surface of the objective lens with the solution immersion.
9. The computer 14 turns on the power of the laser power used in the measurement. The computer 14 focuses the light to the sample solution and irradiates the sample solution in the well through the objective lens with the light emitted from the light source.
10. The computer 14 performs an initial setting of the shutter.
11. The computer 14 adjusts the focal position of the objective lens. That is, the objective lens Z-axis adjustment mechanism is controlled to adjust the position of the spot light along the Z-axis direction in the sample.
12. The computer 14 on/off-controls the polarizer and the light scanning mechanism power supply according to the measurement item.
13. The computer 14 adjusts the position of each optical element using the photodetector. While the signal of the fluorescence emitted from the sample is detected by the photodetector, the position of the optical element in the optical path through which the signal light passes is adjusted in the optical axis direction and the X- and Y-axis directions, i.e., the horizontal direction to optimize the arrangement of the optical elements.
14. The computer 14 adjusts the light intensity of the light source. While the signal of the fluorescence emitted from the sample is detected by the photodetector, the driving current of the laser beam source is adjusted.
15. When the position adjustment is completed for all the optical elements, the computer 14 turn off the power of the optical position sensor by the instruction.
16. The computer 14 starts the measurement.
17. The computer 14 turns off the laser power supply when the measurement is ended.
18. The computer 14 turns off the main power supply.

Thus, the measurement can automatically be performed in the measurement apparatus of the first embodiment. The sample stage is driven to move the plane position, i.e., X-Y direction of the microplate. The positioning is performed to the sample which should next be measured in the well of the microplate. At this point, the optical position sensor is turned on to adjust the position of the photodetector again. Alternatively, an operator manually adjusts the position of each optical element if needed.

The switching operation of the optical elements in the measurement apparatus in switching the FCS measurement and the FIDA measurement will be described below. The beam scanning apparatus 9 is the main optical element which is switched during the switching of the measurement.

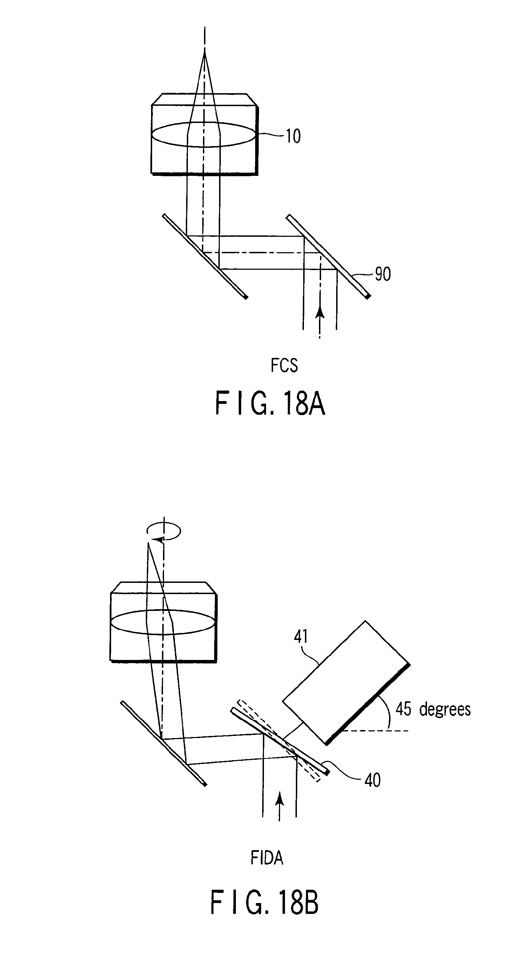

FIGS. 18A and 18B show the method for switching the beam scanning apparatus. FIG. 18A shows the beam scanning apparatus 9 in the FCS measurement. The mirror 90 is disposed at 45 degrees relative to the optical axis shown by a dotted line. In the arrangement of FIG. 18A, the laser beam is focused along the optical axis of the objective lens 10. Desirably the focal point is provided on the optical axis to most effectively use the objective lens 10.

FIG. 18B shows the beam scanning apparatus 9 in the FIDA measurement. The eccentrically rotating mirror 40 is disposed with an angle at which the eccentrically rotating mirror 40 is slightly inclined from 45 degrees relative to the optical axis shown by an alternate long and short dash line. The eccentrically rotating mirror 40 is connected to the motor 41, and the rotating axis of the motor 41 is not perpendicular to the mirror surface of the eccentrically rotating mirror 40. The focal point of the laser beam is rotated about the optical axis of the objective lens 10 by the rotation of the motor 41.

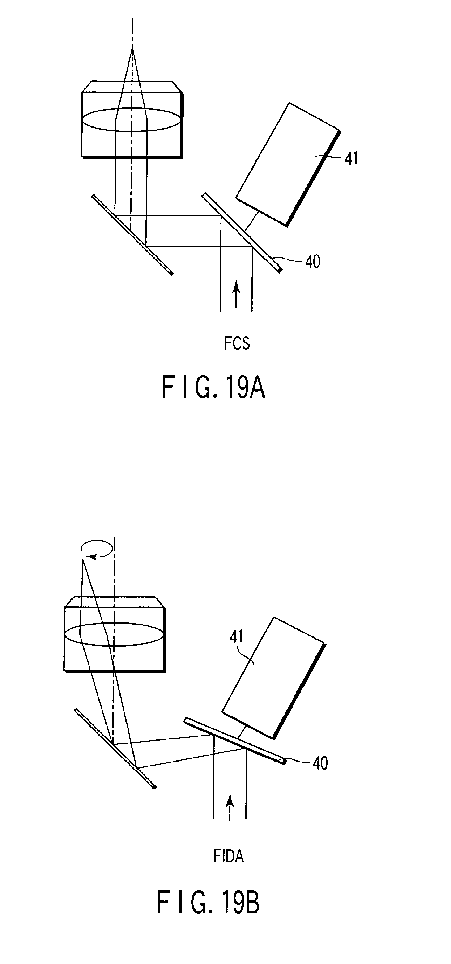

FIGS. 19A and 19B are views explaining another method for explaining the beam scanning apparatus.

FIG. 19A shows the beam scanning apparatus 9 in the FCS measurement. In the configuration of FIG. 19A, the beam scanning apparatus 9 having the same configuration as that of FIG. 18B is commonly used in both the FCS measurement and the FIDA measurement. However, the configuration of FIG. 19 differs from that of FIG. 18B in that the rotating shaft of the motor 41 is attached with an angle which is not the 45 degrees. Therefore, in one turn of the eccentrically rotating mirror 40, there is a rotation angle at which the eccentrically rotating mirror 40 has the same arrangement as that of FIG. 18A with respect to the optical axis. FIG. 19A shows this state. The rotation angle of FIG. 19A is stored, and the eccentrically rotating mirror 40 is rotated such that the rotation angle of FIG. 19A is obtained when the measurement is switched to the FCS measurement.

FIG. 19B shows the beam scanning apparatus 9 in the FIDA measurement. The beam scanning apparatus 9 of FIG. 19B has the same configuration as that of FIG. 19A. When the eccentrically rotating mirror 40 is directly rotated, the focal point of the laser beam is rotated around the optical axis of the objective lens 10 as shown in FIG. 19B.

Then, the operation of the optical measurement apparatus when the measurement is switched to the FCS measurement will be described below. During the operation, the computer 14 automatically controls the optical measurement apparatus.
1. When a user inputs the start-up of the measurement apparatus to the computer 14, the computer 14 turns on the main power supply of the measurement apparatus.
2. When the user sets the FCS measurement, the computer 14 selects the combination of the optical elements in the measurement apparatus according to a predetermined table. The computer 14 also selects the laser used.
3. The computer 14 turns on the power of the optical position sensor. Then, the computer 14 controls power-on and off of the optical position sensor according to the operation program of the measurement apparatus.
4. The computer 14 moves the sample stage to the initial position.
5. The computer 14 adjusts the position of the optical elements using the optical position sensor. While the signal of the fluorescence emitted from the sample is monitored by the light intensity monitoring photodetector, the positions of the optical elements in the optical path through which the signal light passes are adjusted in the optical axis direction and the X-and Y-axis directions, i.e., horizontal direction to optimize the arrangement of the optical elements.
6. The user sets the samples in the wells of the microplate. The microplate is placed on the sample stage.
7. The computer 14 turns on the power of the solution immersion feeding mechanism to fill the upper surface of the objective lens with the solution immersion.
8. The computer 14 turns on the power of the laser power used in the measurement. The computer 14 focuses the light to the sample solution and irradiates the sample solution in the well through the objective lens with the light emitted from the light source.
9. The computer 14 turns off the power of the light scanning mechanism. The computer 14 stops the light scanning mechanism, and the computer 14 performs the adjustment such that the light beam is located at the desired position in the sample.
10. The computer 14 adjusts the light intensity of the light source. While the signal of the fluorescence emitted from the sample is detected by the photodetector, the driving current of the laser beam source is adjusted.
11. When the positions of all the corresponding optical elements such as the dichroic mirror 101, the barrier filter 64, and the pinhole 52 are adjusted, the computer 14 turns off the power of the optical position sensor by the instruction.
12. The computer 14 starts the measurement.
13. The computer 14 turns off the laser power supply when the measurement is ended.
14. The computer 14 turns off the main power supply.

The operation of the optical measurement apparatus when the measurement is switched to the FIDA measurement will be described below. Because the operation is similar to the operation of the FCS measurement, the different operations are mainly described.
1. When a user inputs the start-up of the measurement apparatus to the computer 14, the computer 14 turns on the main power supply of the measurement apparatus.
2. When the user sets the FIDA measurement, the computer 14 selects the combination of the optical elements in the measurement apparatus according to a predetermined table. The computer 14 also selects the laser used. At this point, when the FIDA polarization measurement is selected, the polarizer holder 28 is driven to insert the polarization plate into the optical path.
3 to 8 are same as those of the FCS measurement.
9. The computer 14 turns on the power of the light scanning mechanism. The computer 14 performs the adjustment such that the light beam is located at the desired position in the sample.
10 to 14 are same as those of the FCS measurement.

Thus, according to the measurement apparatus of the embodiment, the dynamic optical analysis of various samples can be performed rapidly and efficiently without changing the basic configuration of the measurement apparatus only by switching the optical elements.

The invention is not limited to the embodiments, but various modifications can be made without departing from the scope of the invention. Various modifications and changes can be made by the appropriate combination of plural components disclosed in the embodiments. For example, some components can be eliminated from all the components shown in the embodiments. The components of the different embodiments can appropriately be combined.

### Industrial Applicability

The invention can provide the optical measurement apparatus in which the dynamic optical analysis of various samples can be performed rapidly and efficiently without changing the basic configuration of the measurement apparatus to the manufacturing industry.

## Claims

1. An optical measurement apparatus which comprises at least one each of a light source, an optical element, a photodetector, and a sample container, and which measures a physical property of a biological sample in a solution retained by the sample container according to a plurality of kinds of measurement items,
**characterized in that** a combination of the light source, the optical element, and the photodetector is selected or changed according to the measurement item, and a position where the photodetector is located is adjusted according to the selection or change based on intensity of light accepted by the photodetector.

2. The optical measurement apparatus according to claim 1, **characterized in that** the light source is a laser.

3. The optical measurement apparatus according to claim 1, **characterized in that** the optical element used in switching is one of a concentration filter, a wavelength selection element, a mirror, and a polarizer.

4. The optical measurement apparatus according to claim 1, **characterized in that** an optical signal obtained by the photodetector is intensity of the optical signal derived from the biological sample or a temporal change in optical signal.

5. The optical measurement apparatus according to claim 4, **characterized in that** correlation spectroscopy of a fluctuation in intensity of the optical signal is performed.

6. The optical measurement apparatus according to claim 1, **characterized in that** at least a part of a bottom surface of the sample container is made of a light transmission material.

7. The optical measurement apparatus according to claim 1, **characterized in that** the sample container is a microplate.

8. The optical measurement apparatus according to claim 1, **characterized by** further comprising another optical element which is disposed on an optical path at the back of the light source, another optical element including a optical waveguide having a micro diameter and a material having a refractive index smaller than a refractive index of the optical waveguide, the material being located around the optical waveguide,
wherein a section of the optical waveguide is formed in a mode field diameter in which the light having a wavelength passing through the optical waveguide propagates in a single mode.

9. An optical measurement apparatus which comprises at least one each of a light source, a lens, a photodetector, a sample container, a light scanning mechanism being provided to scan light emitted from the light source in the sample container, and an optical element, and which measures a physical property of a biological sample in a solution retained by the sample container according to a plurality of kinds of measurement items,
**characterized in that** arrangement and operation of the light scanning mechanism are controlled according to the measurement item.

10. The optical measurement apparatus according to claim 9, **characterized in that** the light source is a laser.

11. The optical measurement apparatus according to claim 9, **characterized in that** the optical element used in switching is one of a concentration filter, a wavelength selection element, a mirror, and a polarizer.

12. The optical measurement apparatus according to claim 9, **characterized in that** an optical signal obtained by the photodetector is intensity of the optical signal derived from the biological sample or a temporal change in optical signal.

13. The optical measurement apparatus according to claim 12, **characterized in that** correlation spectroscopy of a fluctuation in intensity of the optical signal is performed.

14. The optical measurement apparatus according to claim 9, **characterized in that** at least a part of a bottom surface of the sample container is made of a light transmission material.

15. The optical measurement apparatus according to claim 9, **characterized in that** the sample container is a microplate.
